# EUROPÄISCHE PATENTSCHRIFT

(11) **EP 1 511 672 B1**
(45) Veröffentlichungstag und Bekanntmachung des Hinweises auf die Patenterteilung: **26.10.2005**
(21) Anmeldenummer: 03752768.6
(22) Anmeldetag: 19.05.2003
(51) Int. Cl.: B64D 11/00

(54) **ABSENKBARES GEPÄCKFACH MIT GASDRUCKFEDERVERRIEGELUNG**
LUGGAGE COMPARTMENT THAT CAN BE LOWERED COMPRISING A HYDRAULIC CYLINDER LOCKING MECHANISM
COMPARTIMENT A BAGAGES ABAISSABLE A VERROUILLAGE PAR RESSORT A PRESSION DE GAZ

(30) Priorität: 17.05.2002 DE 10222123
(43) Veröffentlichungstag der Anmeldung: 09.03.2005
(73) Patentinhaber: Aircabin GmbH, 88471 Laupheim (DE)
(72) Erfinder: GRAF, Oleg, 89257 Illertissen (DE); POBERSCHNIGG, Ralf, 90513 Zirndorf (DE)
(74) Vertreter: Beyer, Andreas
(86) Internationale Anmeldenummer: PCT/EP2003/005250
(87) Internationale Veröffentlichungsnummer: WO 2003/097456

(56) Entgegenhaltungen:
- EP-A- 1 249 392
- DE-A- 19 800 588
- US-A- 5 441 218
- US-A- 5 839 719

## Beschreibung

Die vorliegende Erfindung betrifft ein absenkbares Gepäckfach, insbesondere für ein Passagierflugzeug.

Absenkbare Gepäckfächer wie z.B. bei der US-A-5,441,218 weisen häufig eine Kraftunterstützungseinrichtung auf, die die von einem Benutzer aufzubringende Kraft beim Schließen eines beladenen Gepäckfaches verringert. Diese Kraftunterstützungseinrichtungen sind an den Seiten des Gepäckfaches angebracht und weisen häufig eine Gasdruckfeder auf, die die benötigte Unterstütrungskraft liefert. In der Schließstellung wird das Gepäckfach mittels mechanischer Schlösser oder ähnlicher Verriegelungseinheiten arretiert, die sich auf beiden Seiten des Gepäckfaches befinden und in der Verriegelungsstellung eine formschlüssige Verbindung mit dem geschlossenen Gepäckfach herstellen. Ebenso wie die Kraftunterstützungseinrichtungen benötigen auch die Schlösser einen Einbauraum seitlich des Gepäckfaches, so dass zwischen benachbarten Gepäckfächern ein Abstand erforderlich ist, der als Nutzvolumen nicht zur Verfügung steht.

Der Erfindung liegt die Aufgabe zugrunde, ein verriegelbares absenkbares Gepäckfach bereitzustellen, dessen Verriegelung leichter ist und weniger Einbauraum benötigt als bisherige Verriegelungssysteme.

Diese Aufgabe ist bei einem absenkbaren Gepäckfach, das eine mit dem Gepäckfach verbundene Gasdruckfeder aufweist, erfindungsgemäß dadurch gelöst, dass die Gasdruckfeder eine starr blockierbare Gasdruckfeder mit einem von außen ansteuerbaren Ventil zum wahlweisen Öffnen oder Absperren des Hydrauliksystems der Gasdruckfeder ist, und dass das Hydrauliksystem der Gasdruckfeder in der Schließstellung des Gepäckfaches mittels des Ventils abgesperrt ist. Erfindungsgemäß wird demnach keine separate, an den Seiten des Gepäckfaches Einbauraum beanspruchende mechanische Verriegelung mehr benötigt, sondern die Verriegelung des absenkbaren Gepäckfaches in seiner Schließstellung wird mittels einer starr blockierbaren Gasdruckfeder erreicht. Der Begriff "Schließstellung" ist dabei so zu verstehen, dass das Gepäckfach zumindest im wesentlichen geschlossen ist. Beispielsweise macht ist es unschädlich, wenn eine Gepäckfachseite aufgrund einer stark asymmetrischen Beladung des Gepäckfaches noch etwas herunterhängt, denn eine starr blockierbare Gasdruckfeder kann in jeder Hubstellung verriegelt werden. Im Gegensatz dazu müssen bei einer herkömmlichen mechanischen Verriegelung mittels Schließbolzen auf beiden Gepäckfachseiten diese beide Gepäckfachseiten auch tatsächlich vollständig die Schließstellung erreichen, da sonst keine Verriegelung durch die Schließbolzen stattfindet.

Eine solche starr blockierbare Gasdruckfeder kann anstelle der herkömmlicherweise in den genannten Kraftunterstützungseinrichtungen verwendeten, weder starr noch federnd blockierbaren Gasdruckfedern eingesetzt werden. Falls gewünscht, kann aber auch zusätzlich eine solche starr blockierbare Gasdruckfeder vorgesehen werden, beispielsweise dann, wenn die verwendete Kraftunterstützungseinrichtung keine Gasdruckfeder umfasst. Die erfindungsgemäße Gasdruckfederverriegelung kann an den Seiten des Gepäckfaches angeordnet sein, beispielsweise als Teil einer herkömmlichen Kraftunterstützungseinrichtung, vorzugsweise ist sie jedoch an der Rückseite des Gepäckfaches angeordnet, besonders vorzugsweise in der Mitte der Rückseite, da sich dann eine asymmetrische Beladung des Gepäckfaches am wenigsten auswirkt. Zudem stört die erfindungsgemäße Gasdruckfederverriegelung auf der Rückseite des Gepäckfaches viel weniger als an dessen Seiten. Wenn eine erfindungsgemäße Gasdruckfederverriegelung in der Mitte der Rückseite des Gepäckfaches angeordnet ist, so reicht dies zur sicheren Verriegelung des Gepäckfaches in seiner Schließstellung völlig aus. Selbst eine stark asymmetrische Belastung des Gepäckfaches oder die bei einer Bruchlandung eines Flugzeuges auftretenden Belastungen führen nicht zu einem unerwünschten Öffnen des Gepäckfaches, da eine starr verriegelte Gasdruckfeder Kräften von bis zu 10.000 N widerstehen kann.

Gemäß einer bevorzugten Ausführungsform ist das das Hydrauliksystem der Gasdruckfeder wahlweise öffnende oder absperrende Ventil ein elektrisch betätigbares Ventil. Vorzugsweise wird dieses elektrisch betätigbare Ventil von einem Elektromotor betätigt, alternativ ist auch die Ansteuerung mittels eines Elektromagneten möglich.

Bei bevorzugten Ausführungsformen des erfindungsgemäßen Gepäckfaches steuert ein Signal eines Sensors, der die Schließstellung des Gepäckfaches erfasst, das elektrisch betätigbare Ventil in seine Absperrstellung. Die Gasdruckfeder ist dann starr blockiert, das Gepäckfach somit in seiner Schließstellung verriegelt.

Bei allen Ausführungsbeispielen des erfindungsgemäßen absenkbaren Gepäckfaches ist vorzugsweise eine Einrichtung vorhanden, die eine Betätigung eines Griffes des Gepäckfaches feststellt und daraufhin das elektrisch betätigbare Ventil in seine Offenstellung steuert. Diese Einrichtung kann ein im Griffbereich des Gepäckfaches angebrachter Sensor sein. Der Sensor kann als Kontaktfläche ausgestaltet sein. Gemäß einer Ausführungsform ist die Kontaktfläche eine berührungsempfindliche Folie. Alternativ kann die Einrichtung ein mit dem Griff des Gepäckfaches zusammenwirkender Schalter sein, vorzugsweise ein Mikroschalter.

Ein Ausführungsbeispiel eines erfindungsgemäßen absenkbaren Gepäckfaches mit Gasdruckfederverriegelung wird im folgenden anhand der beigefügten, schematischen Zeichnungen näher erläutert. Es zeigt:
- Fig. 1: eine Seitenansicht eines erfindungsgemäßen absenkbaren Gepäckfaches mit Gasdruckfederverriegelung in Schließstellung, und
- Fig. 2: das Gepäckfach aus Fig. 1 in seiner Offenstellung.

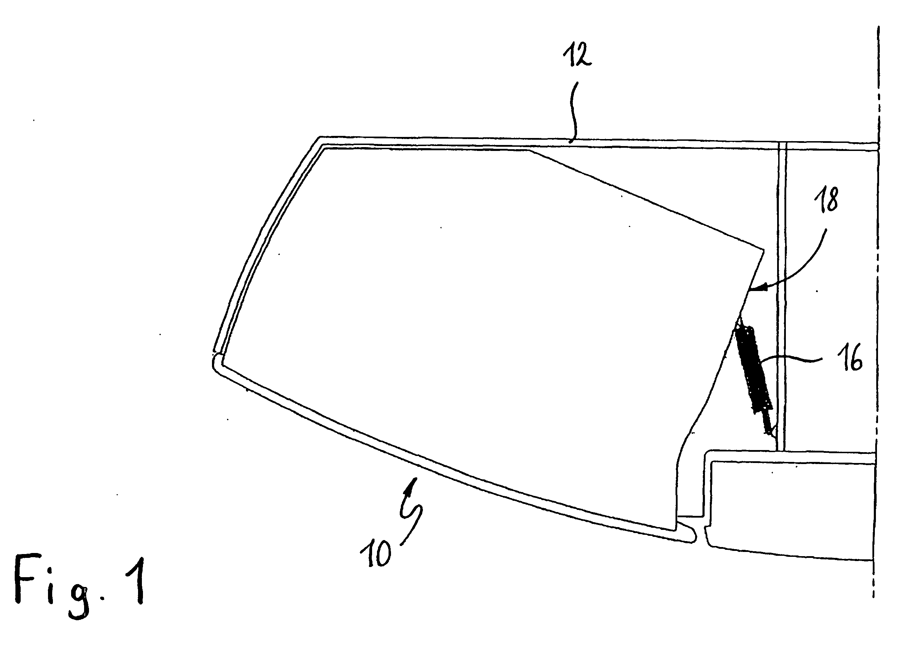

In Fig. 1 ist ein allgemein mit 10 bezeichnetes, absenkbares Gepäckfach dargestellt, das in der gezeigten Form ein Überkopf-Gepäckfach in einem Passagierflugzeug ist. Das Gepäckfach 10 ist in einem Gehäuse 12 aufgenommen, welches in allgemein bekannter und deshalb nicht weiter dargestellter Weise mit der tragenden Struktur des Flugzeuges verbunden ist.

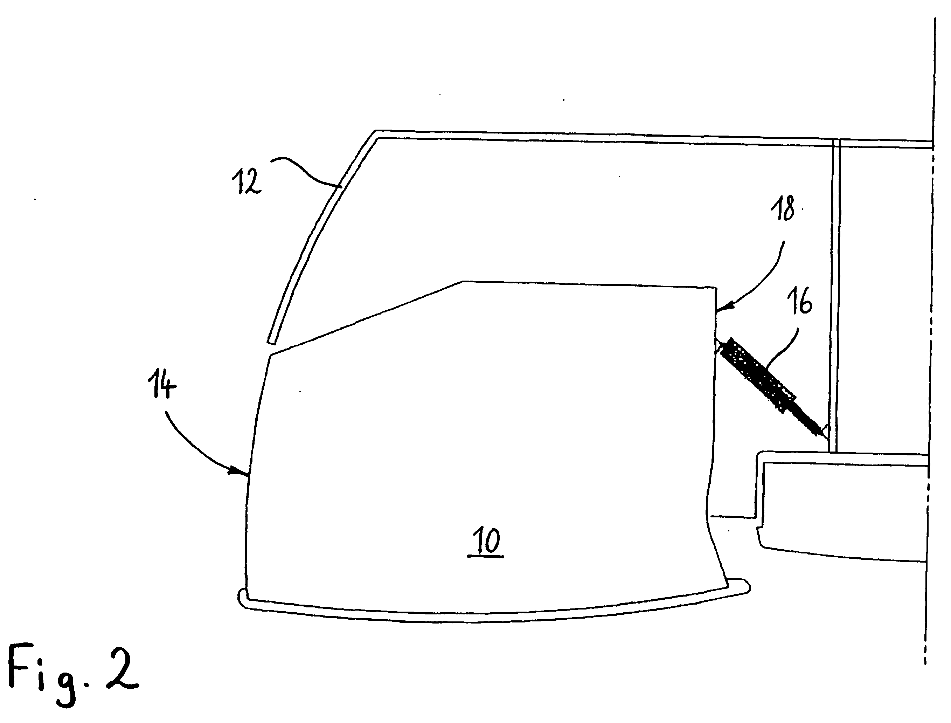

Die Verbindung des Gepäckfaches 10 mit dem Gehäuse 12 erfolgt mittels bekannter und deshalb ebenfalls nicht weiter dargestellter Einrichtungen, die das Öffnen und Schließen des Gepäckfaches 10 ermöglichen und dafür sorgen, dass das Gepäckfach 10 sich beim Öffnen aus der in Fig. 1 gezeigten Schließstellung in die in Fig. 2 wiedergegebene Offenstellung absenkt. In der abgesenkten Stellung ist die offene Vorderseite 14 des Gepäckfaches 10 zugänglich, um das Gepäckfach 10 beladen zu können.

Auf der Rückseite des Gepäckfaches 10 befindet sich eine Gasdruckfeder 16, deren eines Ende schwenkbar an der Rückwand 18 des Gepäckfaches 10 und deren anderes Ende schwenkbar am Gehäuse 12 bzw. an der tragenden Struktur des Flugzeuges angebracht ist. Bei der Gasdruckfeder 16 handelt es sich um eine starr blockierbare Gasdruckfeder mit einem von außen ansteuerbaren Ventil, durch dessen Öffnen bzw. Schließen das Hydrauliksystem der Gasdruckfeder absperrbar ist. Das nicht dargestellte Ventil ist mittels eines ebenfalls nicht dargestellten Elektromotors elektrisch betätigbar. Der Elektromotor wird von einem nicht dargestellten Sensor, der die Schließstellung des Gepäckfaches 10 erfasst, so angesteuert, dass das Ventil in seine Absperrstellung gebracht wird, sobald der Sensor die Schließstellung meldet. Aufgrund des solchermaßen abgesperrten Hydrauliksystems der Gasdruckfeder 16 ist letztere dann starr blockiert, so dass das Gepäckfach 10 nicht mehr geöffnet werden kann. Eine starr blockierte Gasdruckfeder kann Kräften von bis zu 10.000 N widerstehen, so dass sichergestellt ist, dass das Gepäckfach 10 sich auch unter extremen Belastungen nicht ungewollt öffnet.

Zum Öffnen des Gepäckfaches 10 muss ein Benutzer einen hier nicht dargestellten Griff ergreifen. Gemäß einer Ausführungsform wird das Berühren des Griffes von einem Sensor erfasst, der ein Signal abgibt, welches den das Ventil betätigenden Elektromotor veranlasst, das Ventil des Hydrauliksystems der Gasdruckfeder 16 in seine Offenstellung zu bringen. Das Gepäckfach 10 kann dann wieder abgesenkt werden.

Gemäß einer anderen Ausführungsform muss ein Benutzer am Griff eine Öffnungsbewegung ausführen, beispielsweise an einer Griffplatte ziehen, und ein mit dem Griff zusammenwirkender Schalter, vorzugsweise ein Mikroschalter, registriert diese Bewegung und veranlasst durch ein entsprechendes Signal, dass das Ventil der Gasdruckfeder in seine Offenstellung bewegt wird.

## Patentansprüche

1. Absenkbares Gepäckfach (10), insbesondere für ein Passagierflugzeug, mit einer mit dem Gepäckfach verbundenen Gasdruckfeder (16),
**dadurch gekennzeichnet, dass**
- die Gasdruckfeder (16) eine starr blockierbare Gasdruckfeder mit einem von außen ansteuerbaren Ventil zum wahlweisen Öffnen oder Absperren des Hydrauliksystems der Gasdruckfeder ist, und dass
- das Hydrauliksystem der Gasdruckfeder (16) in der Schließstellung des Gepäckfaches (10) mittels des Ventils abgesperrt ist.

2. Gepäckfach nach Anspruch 1,
**dadurch gekennzeichnet, dass** das Hydrauliksystem der Gasdruckfeder (16) ein elektrisch betätigbares Ventil zum Absperren und Öffnen des Hydrauliksystems aufweist.

3. Gepäckfach nach Anspruch 2,
**dadurch gekennzeichnet, dass** das elektrisch betätigbare Ventil von einem Elektromotor betätigt wird.

4. Gepäckfach nach Anspruch 2 oder 3,
**dadurch gekennzeichnet, dass** ein Signal eines die Schließstellung des Gepäckfaches (10) erfassenden Sensors das elektrisch betätigbare Ventil in seine Absperrstellung steuert.

5. Gepäckfach nach einem der Ansprüche 2 bis 4,
**dadurch gekennzeichnet, dass** eine eine Betätigung eines Griffes des Gepäckfaches (10) feststellende Einrichtung das elektrisch betätigbare Ventil in seine Offenstellung steuert.

6. Gepäckfach nach Anspruch 5,
**dadurch gekennzeichnet, dass** die Einrichtung ein im Griffbereich des Gepäckfaches (10) angebrachter Sensor ist.

7. Gepäckfach nach Anspruch 6,
**dadurch gekennzeichnet, dass** der Sensor eine Kontaktfläche ist.

8. Gepäckfach nach Anspruch 7,
**dadurch gekennzeichnet, dass** die Kontaktfläche eine berührungsempfindliche Folie ist.

9. Gepäckfach nach Anspruch 5,
**dadurch gekennzeichnet, dass** die Einrichtung ein mit dem Griff des Gepäckfaches (10) zusammenwirkender Schalter ist.

10. Gepäckfach nach einem der vorhergehenden Ansprüche,
**dadurch gekennzeichnet, dass** die Gasdruckfeder (16) auf der Rückseite des Gepäckfaches (10) angeordnet ist.

11. Gepäckfach nach Anspruch 10,
**dadurch gekennzeichnet, dass** die Gasdruckfeder (16) zumindest etwa in der Mitte der Rückseite des Gepäckfaches (10) angeordnet ist.

## Claims

1. Lowerable luggage compartment (10), in particular for a passenger aircraft, having a pneumatic pressure spring (16) connected to the luggage compartment,
**characterized in that**
- the pneumatic pressure spring (16) is a rigidly blockable pneumatic pressure spring with an externally controllable valve for selectively opening or shutting off the hydraulic system of the pneumatic pressure spring, and that
- the hydraulic system of the pneumatic pressure spring (16) is shut off by means of the valve in the closed position of the luggage compartment (10).

2. Luggage compartment according to claim 1,
**characterized in that** the hydraulic system of the pneumatic pressure spring (16) comprises an electrically actuable valve for shutting off and opening the hydraulic system.

3. Luggage compartment according to claim 2,
**characterized in that** the electrically actuable valve is actuated by an electric motor.

4. Luggage compartment according to claim 2 or 3,
**characterized in that** a signal of a sensor, which detects the closed position of the luggage compartment (10), controls the electrically actuable valve into its shut-off position.

5. Luggage compartment according to one of claims 2 to 4,
**characterized in that** a device, which detects actuation of a handle of the luggage compartment (10), controls the electrically actuable valve into its open position.

6. Luggage compartment according to claim 5,
**characterized in that** the device is a sensor provided in the handle region of the luggage compartment (10).

7. Luggage compartment according to claim 6,
**characterized in that** the sensor is a contact surface.

8. Luggage compartment according to claim 7,
**characterized in that** the contact surface is a touch-sensitive foil.

9. Luggage compartment according to claim 5,
**characterized in that** the device is a switch interacting with the handle of the luggage compartment (10).

10. Luggage compartment according to one of the preceding claims,
**characterized in that** the pneumatic pressure spring (16) is disposed at the back of the luggage compartment (10).

11. Luggage compartment according to claim 10,
**characterized in that** the pneumatic pressure spring (16) is disposed at least approximately in the middle of the back of the luggage compartment (10).

## Revendications

1. Compartiment à bagages abaissable (10), destiné en particulier à un avion de passagers, comprenant un ressort à pression de gaz (16) relié audit compartiment,
**caractérisé en ce que**
- le ressort à pression de gaz (16) est un ressort à pression de gaz à blocage rigide pourvu d'une soupape à commande externe permettant l'ouverture ou la fermeture sélective du système hydraulique du ressort à pression de gaz, et **en ce que**
- le système hydraulique du ressort à pression de gaz (16) est fermé à l'aide de la soupape lorsque le compartiment à bagages est en position fermée.

2. Compartiment à bagages selon la revendication 1,
**caractérisé en ce que** le système hydraulique du ressort à pression de gaz (16) présente une soupape à actionnement électrique pour la fermeture et l'ouverture du système hydraulique.

3. Compartiment à bagages selon la revendication 2,
**caractérisé en ce que** la soupape à actionnement électrique est actionnée par un moteur électrique.

4. Compartiment à bagages selon la revendication 2 ou 3,
**caractérisé en ce qu'**un signal émis par un capteur détectant la position fermée du compartiment à bagages commande la fermeture de la soupape à actionnement électrique.

5. Compartiment à bagages selon l'une des revendications 2 à 4,
**caractérisé en ce qu'**un dispositif détectant l'actionnement d'une poignée du compartiment à bagages commande l'ouverture de la soupape à actionnement électrique.

6. Compartiment à bagages selon la revendication 5,
**caractérisé en ce que** ledit dispositif est un capteur placé dans la zone de la poignée du compartiment à bagages (10).

7. Compartiment à bagages selon la revendication 6,
**caractérisé en ce que** le capteur est une surface de contact.

8. Compartiment à bagages selon la revendication 7,
**caractérisé en ce que** ladite surface de contact est une feuille sensible au toucher.

9. Compartiment à bagages selon la revendication 5,
**caractérisé en ce que** ledit dispositif est un commutateur coopérant avec la poignée du compartiment à bagages (10).

10. Compartiment à bagages selon l'une des revendications précédentes,
**caractérisé en ce que** le ressort à pression de gaz (16) est disposé au dos du compartiment à bagages (10).

11. Compartiment à bagages selon la revendication 10,
**caractérisé en ce que** le ressort à pression de gaz (16) est disposé pour le moins environ au milieu du dos du compartiment à bagages (10).
